# EUROPÄISCHE PATENTSCHRIFT

(11) **EP 4 133 332 B1**
(45) Veröffentlichungstag und Bekanntmachung des Hinweises auf die Patenterteilung: **01.11.2023**
(21) Anmeldenummer: 21717813.6
(22) Anmeldetag: 06.04.2021
(51) Int. Cl.: G03B 15/02, G03B 15/03, G03B 37/00

(54) **KAMERASYSTEM ZUR ROHR- UND/ODER KANALINSPEKTION**
CAMERA SYSTEM FOR INSPECTING PIPES AND/OR DUCTS
SYSTÈME DE CAMÉRA POUR INSPECTER DES TUYAUX ET/OU DES CONDUITS

(30) Priorität: 08.04.2020 DE 102020002207
(43) Veröffentlichungstag der Anmeldung: 15.02.2023
(73) Patentinhaber: Rausch GmbH, 88138 Weissensberg (DE)
(72) Erfinder: EGLIN, Renè, 88138 Weißensberg (DE)
(74) Vertreter: Müller-Boré & Partner Patentanwälte PartG mbB
(86) Internationale Anmeldenummer: PCT/EP2021/058904
(87) Internationale Veröffentlichungsnummer: WO 2021/204779

(56) Entgegenhaltungen:
- DE-U1- 29 520 862
- DE-U1- 29 604 865
- US-A1- 2011 235 322
- US-A1- 2015 219 309

## Beschreibung

Die Erfindung betrifft ein Kamerasystem zur Rohr- und/oder Kanalinspektion.

Zur optischen Inspektion eines Kanals bzw. eines Rohrs, insbesondere das Innere eines Kanals bzw. Rohrs, können beispielsweise Fahrwagen bzw. Schiebestäbe eingesetzt werden, welche in den zu inspizierenden Kanal bzw. in das zu inspizierende Rohr eingebracht werden. An dem Fahrwagen bzw. Schiebestab kann ein Kamerasystem angeordnet sein, mit welchem der Kanal bzw. das Rohr von innen optisch inspiziert werden kann.

Für die optische Inspektion ist es wichtig, dass das Rohr bzw. der Kanal gut ausgeleuchtet sind, um Details des Rohrs bzw. des Kanals erkennen zu können. Hierzu ist es wünschenswert, dass das Rohr bzw. der Kanal in Blickrichtung des Kamerasystems möglichst gleichmäßig ausgeleuchtet sind. Insbesondere soll der Bildwinkelbereich, welchen das Kamerasystem aufweist, möglichst gleichmäßig ausgeleuchtet sein, so dass Details in Blickrichtung des Kamerasystems als auch Details an der Innenseite des Rohrs bzw. des Kanals gut erkennbar sind. Ferner soll eine Beleuchtung des Rohrs bzw. des Kanals kostengünstig und einfach realisierbar sein.

Ferner ist aus DE 295 20 862 U1 eine Kamera zur Innenuntersuchung von Rohren bekannt. Die Kamera weist ein Weitwinkelobjektiv mit einer optischen Achse und einen um die optische Achse herum angeordneten kegelförmigen Beobachtungsbereich auf. Ferner weist die Kamera eine Mehrzahl von ringförmig um das Weitwinkelobjektiv herum angeordneten Lichtquellen auf.

Die DE 296 04 865 U1 betrifft eine Vorrichtung zur Innenuntersuchung von Rohren mit einer von einer Zugangsstelle in ein Rohr einbringbaren Sonde, wobei die Sonde an ihrer Vorderseite eine von der Zugangsstelle weg in das Rohr blickende Untersuchungskamera aufweist. Die Sonde weist an ihrer Rückseite eine zusätzliche, zu der Zugangsstelle hin in das Rohr blickende Orientierungskamera auf.

Die US 2015/219309 A1 betrifft eine Hindernisleuchte, die Folgendes umfasst: einen Reflektor, der einen ersten parabolischen Abschnitt und einen zweiten parabolischen Abschnitt umfasst, und eine Leuchtenanordnung, die mindestens ein Feld von Lichtquellen umfasst, die benachbart zu dem Reflektor zwischen dem ersten parabolischen Abschnitt und dem zweiten parabolischen Abschnitt angeordnet sind.

Die US 2011/235322 A1 betrifft eine Beleuchtungsanordnung mit hoher Intensität auf LED-Basis zur Verwendung in einem Hindernislicht mit effizienter gleichmäßiger Lichtabgabe.

Es ist daher Aufgabe der vorliegenden Erfindung, ein Kamerasystem zur Rohr- und/oder Kanalinspektion vorzuschlagen, dass eine gleichmäßige Ausleuchtung eines Rohrs bzw. eines Kanals ermöglicht und welches einen einfachen und kostengünstigen Aufbau aufweist.

Diese Aufgabe wird durch den Gegenstand des unabhängigen Anspruchs gelöst. Bevorzugte Ausführungsformen sind in den abhängigen Ansprüchen definiert.

Ein Aspekt betrifft ein Kamerasystem zur Rohr- und/oder Kanalinspektion. Das

Kamerasystem weist ein Objektiv zum Abbilden eines Objekts auf eine Bilderfassungseinheit auf. Des Weiteren weist das Kamerasystem ein erstes und ein zweites Beleuchtungsmittel auf, die jeweils radial um die optische Achse des Objektivs angeordnet sind und dazu ausgebildet sind, Licht in Richtung einer Abstrahlrichtung, welche im Wesentlichen parallel zur optischen Achse des Objektivs verläuft, zum Beleuchten des Objekts auszustrahlen. Dabei ist das erste Beleuchtungsmittel in Abstrahlrichtung liegend vor dem zweiten Beleuchtungsmittel angeordnet ist. Des Weiteren ist zwischen dem ersten Beleuchtungsmittel und dem zweiten Beleuchtungsmittel ein erster Reflektor angeordnet, der dazu ausgebildet ist, von dem zweiten Beleuchtungsmittel einfallendes Licht in den Bildwinkelbereich des Objektivs zu reflektieren.

Ein Vorteil des gewählten Aufbaus des ersten und des zweiten Beleuchtungsmittels mit dazwischen liegendem erstem Reflektor ist, dass das von dem Bildwinkelbereich des Objektivs erfasste Objekt, beispielsweise, das Rohrinnere bzw. Kanalinnere gleichmäßig bzw. homogen ausgeleuchtet bzw. beleuchtet wird. Somit kann ein durch die Bilderfassungseinheit, beispielsweise einem Bildsensor, bereitgestelltes Bild des Objekts entsprechend gut ausgeleuchtet sein, wodurch Details in dem Bild gut erkennbar sind.

Beleuchtungsmittel und insbesondere LED-Beleuchtungsmittel haben in der Regel einen bestimmten Abstrahlwinkel in dem Licht abgestrahlt wird. Mit dem Begriff Abstrahlwinkel wird ein Aspekt der Richtcharakteristik des Beleuchtungsmittels beschrieben. Unter der Richtcharakteristik ist insbesondere die winkelabhängige Lichtstärke (Candela) des Beleuchtungsmittels zu verstehen. Vorliegend wird unter Abstrahlwinkel jener Winkel verstanden, der von den seitlichen Punkten, mit der das Licht vom dem Beleuchtungsmittel abstrahlt, noch mit halber Maximal-Lichtstärke eingeschlossen wird. Mit anderen Worten, der Abstrahlwinkel gibt Auskunft darüber, in welchem Winkel das Licht von dem Beleuchtungsmittel in Richtung des Objekts abgestrahlt wird. Ferner wird im Rahmen der vorliegenden Offenbarung unter dem Begriff "Abstrahlrichtung" die Winkelhalbierende des Abstrahlwinkels verstanden, wobei die Abstrahlrichtung von dem Kamerasystem in Richtung des Objekts weist.

Gerade für den Fall, dass der Abstrahlwinkel eines Beleuchtungsmittels kleiner ist als der Bildwinkelbereich des Objektivs, kann der vollständige Bildwinkelbereich nicht gleichmäßig ausgeleuchtet werden, so dass unter Umständen ein Objekt im Bildwinkelbereich schlecht ausgeleuchtet ist.

Vorzugsweise sind das erste Beleuchtungsmittel, das zweite Beleuchtungsmittel und der erste Reflektor derart angeordnet bzw. ausgestaltet, dass der Bildwinkelbereich des Objektivs im Wesentlichen homogen ausgeleuchtet wird. Insbesondere kann das erste Beleuchtungsmittel dazu ausgebildet sein, mit dem Licht, welches im Abstrahlwinkel abgestrahlt wird, im Wesentlichen den Innenbereich des Bildwinkelbereichs zu beleuchten. Mit anderen Worten, das erste Beleuchtungsmittel kann insbesondere dazu ausgebildet sein, ins Rohr- bzw. Kanalinnere zu leuchten.

Ferner können das zweite Beleuchtungsmittel und der erste Reflektor derart zueinander angeordnet sein, dass von dem zweiten Beleuchtungsmittel ausgestrahltes Licht, welches von dem ersten Reflektor in den Bildwinkelbereich reflektiert wird, im Wesentlichen den an den Innenbereich (unmittelbar) anschließenden Außenbereich des Bildwinkelbereichs beleuchtet. Mit anderen Worten, das zweite Beleuchtungsmittel und der erste Reflektor können insbesondere dazu ausgebildet sein, den Abschnitt der Innenseite des Rohr- bzw. des Kanals zu beleuchten, welcher von dem Bildwinkelbereich des Objektivs noch erfasst wird.

D.h., Licht vom zweiten Beleuchtungsmittel kann mittels des ersten Reflektors im Wesentlichen in die Bereiche des Bildwinkelbereichs reflektiert werden, welche nicht durch den Abstrahlwinkel des ersten Beleuchtungsmittels erfasst sind.

Ferner kann vorgesehen sein, dass der erste Reflektor radial um die optische Achse des Objektivs angeordnet ist.

Vorzugsweise kann das Objektiv als Fischaugenobjektiv ausgebildet sein und bevorzugt einen Bildwinkel bzw. Bildwinkelbereich von bis zu 180° aufweisen. Vorteilhaft können durch diesen großen Bildwinkelbereich das Innere des Rohrs- bzw. Kanals und ein großer Abschnitt der Innenseite des Rohrs- bzw. Kanals erfasst werden.

Vorzugsweise kann das Kamerasystem einen zweiten Reflektor aufweisen, der dazu ausgebildet ist, von dem zweiten Beleuchtungsmittel einfallendes, insbesondere direkt einfallendes Licht in Richtung des ersten Reflektors zu reflektieren. Dieses von dem zweiten Reflektor einfallende Licht kann dann mittels des ersten Reflektors in Richtung des Bildwinkelbereichs reflektiert werden, um die Ausleuchtung, insbesondere die Ausleuchtung der Innenseite des Rohrs- bzw. des Kanals zu verbessern bzw. zu verstärken.

Ferner kann vorgesehen sein, dass der zweite Reflektor radial um die optische Achse des Objektivs und um das zweite Beleuchtungsmittel angeordnet ist.

Vorzugsweise können das erste Beleuchtungsmittel und das zweite Beleuchtungsmittel identisch ausgebildet sein. Vorteilhaft können somit identische Beleuchtungsmittel verwendet werden, wodurch der Aufbau des Kamerasystems vereinfacht und Kosten für die Beleuchtungseinrichtung des Kamerasystems reduziert werden können.

Vorzugsweise können das erste Beleuchtungsmittel und das zweite Beleuchtungsmittel in Richtung der optischen Achse deckungsgleich angeordnet sein.

Vorzugsweise können das erste Beleuchtungsmittel und/oder das zweite Beleuchtungsmittel eine Vielzahl von LEDs aufweisen, die bevorzugt an einer ringförmigen Leiterplatte des jeweiligen Beleuchtungsmittels angeordnet sind. Insbesondere sind die Vielzahl der LEDs im Wesentlichen gleichmäßig im Kreis herum an der ringförmigen Leiterplatte angeordnet. Der Einsatz von LEDs ist vorteilhaft, da diese einen geringen Energieverbrauch aufweisen und kostengünstig verfügbar sind. Des Weiteren können LEDs einen hohen Lichtstrom aufweisen, was zu einer guten Ausleuchtung führt.

Vorzugsweise weisen das erste und das zweite Beleuchtungsmittel jeweils mindestens acht (8) LEDs auf, die im Wesentlichen gleichmäßig im Kreis herum an der Ringförmigen Leiterplatte angeordnet sind. In einer besonders bevorzugten Ausführungsform weisen das erste und das zweite Beleuchtungsmittel jeweils mindestens vierundzwanzig (24) LEDs auf, die im Wesentlichen gleichmäßig im Kreis herum an der Ringförmigen Leiterplatte angeordnet sind, wodurch eine besonders gute Ausleuchtung erzielt werden kann.

Vorzugsweise kann der erste Reflektor eine reflektierende Fläche aufweisen, die derart gegenüber der optischen Achse angestellt ist, dass ein Normalenvektor der reflektierenden Fläche und die optische Achse einen Winkel zwischen 40° und 85° einschließen, und bevorzugt einen Winkel zwischen 35° und 80° einschließen. Bevorzugt weist der Normalenvektor ausgehend von dem ersten Reflektor, insbesondere ausgehend von der reflektierenden Fläche des ersten Reflektors, von der optischen Achse weg. Insbesondere bei einem Einsatz eines Fischaugenobjektivs, kann die Innenseite des Rohrs- bzw. Kanals unter der vorgegeben Winkel gut ausgeleuchtet werden.

Vorzugsweise kann das Kamerasystem ein im Wesentlichen hohlzylindrisches Gehäuse aufweisen, wobei das Objektiv an einem in Abstrahlrichtung liegenden Ende des Gehäuses angeordnet ist. Durch die hohlzylindrische Form des Gehäuses ist das Kamerasystem besonders gut an die Form eines Rohrs- bzw. Kanals angepasst.

Vorzugsweise weist das Gehäuse an dem in Abstrahlrichtung liegendem Ende eine Öffnung auf, in der das Objektiv fluiddicht angeordnet bzw. eingefasst ist.

Vorzugsweise kann der erste Reflektor als hohlzylindrischer Kegelstumpf ausgebildet sein, der um das Gehäuse herum angeordnet ist, wobei die Mantelfläche des Kegelstumpfs bzw. des ersten Reflektors als reflektierende Fläche ausgebildet ist, um von dem zweiten Beleuchtungsmittel einfallendes Licht in den Bildwinkelbereich des Objektivs zu reflektieren. Insbesondere kann der erste Reflektor dazu ausgebildet sein, von dem Gehäuse lösbar bzw. mit dem Gehäuse verbindbar zu sein. Als hohlzylindrischer Kegelstumpf wird ein Kegelstumpf verstanden, der eine zylindrisch geformte Ausnehmung aufweist, welche sich ausgehend von der Grundfläche bis zur Deckfläche des Kegelstumpfs durch den Kegelstumpf erstreckt. Die Rotationsachse des Kegelstumpfs und die Zylinderachse der hohlzylindrischen Ausnehmung liegen dabei aufeinander. Ferner kann der Durchmesser der hohlzylindrischen Ausnehmung im Wesentlichen dem Außendurchmesser des Gehäuses entsprechen, sodass der erste Reflektor auf das Gehäuse aufschiebbar ist. Mit anderen Worten, der Durchmesser der hohlzylindrischen Ausnehmung ist unwesentlich größer als der Außendurchmesser des Gehäuses.

Ferner kann die Grundfläche des ersten Reflektors an dem in Abstrahlrichtung liegenden Ende des Gehäuses angeordnet sein und die Deckfläche des ersten Reflektors ist entgegen der Abstrahlrichtung von der Grundfläche beabstandet. Die Grundfläche und die Deckfläche sind durch eine Mantelfläche verbunden, wobei der Durchmesser der Grundfläche größer ist als der Durchmesser der Deckfläche. D.h., die Mantelfläche wird durch einen Abschnitt zwischen Grundfläche und Deckfläche gebildet, wobei der Abschnitt entgegen der Abstrahlrichtung einen sich linear verkleinernden Außendurchmesser aufweist.

Vorzugsweise kann das erste Beleuchtungsmittel an einer in Abstrahlrichtung liegenden Seite des ersten Reflektors angeordnet sein. Die in Abstrahlrichtung liegende Seite des ersten Reflektors kann dabei der Grundfläche des ersten Reflektors entsprechen. Ferner kann der Mittelpunkt des ersten Beleuchtungsmittels mit der Rotationsachse des ersten Reflektors zusammenfallen.

Vorzugsweise ist das erste Beleuchtungsmittel von dem ersten Reflektor lösbar bzw. mit dem ersten Reflektor verbindbar. Beispielsweise kann die Leiterplatte des ersten Beleuchtungsmittels an der Grundfläche bzw. an der in Abstrahlrichtung liegenden Seite des ersten Reflektors mit dem ersten Reflektor verschraubt sein. Vorteilhafterweise kann somit ein modularer Aufbau des Kamerasystems bereitgestellt werden.

Vorzugsweise kann der zweite Reflektor im Wesentlichen hohlzylindrisch ausgebildet sein und zumindest abschnittsweise entlang der Zylinderachse des Gehäuses um das Gehäuse herum und zumindest abschnittsweise um den ersten Reflektor herum angeordnet sein. Ferner kann der erste Reflektor einen im Wesentlichen hohlzylindrischen Abschnitt aufweisen, welcher sich im Anschluss an die Deckfläche bzw. Mantelfläche entgegen der Abstrahlrichtung erstreckt. Der Innendurchmesser des hohlzylindrischen Abschnitts des ersten Reflektors entspricht dabei im Wesentlichen dem Durchmesser der hohlzylindrischen Ausnehmung des ersten Reflektors, so dass der erste Reflektor auf das Gehäuse aufschiebbar ist.

Ferner entspricht der Innendurchmesser des zweiten Reflektors im Wesentlichen dem Außendurchmesser des hohlzylindrischen Abschnitts des ersten Reflektors, so dass der zweite Reflektor auf den hohlzylindrischen Abschnitt des ersten Reflektors aufschiebbar ist. Mit anderen Worten, der Innendurchmesser des zweiten Reflektors ist nur unwesentlich größer als der Außendurchmesser des hohlzylindrischen Abschnitts des ersten Reflektors.

Insbesondere ist der zweite Reflektor derart an dem Gehäuse angeordnet, dass der zweite Reflektor den hohlzylindrischen Abschnitt des ersten Reflektors zumindest abschnittsweise entlang der Zylinderachse des ersten Reflektors umgibt. Des Weiteren kann der zweite Reflektor mit dem ersten Reflektor verbindbar bzw. von diesem lösbar sein. Ferner können die Zylinderachsen des ersten Reflektors, des zweiten Reflektors und die optische Achse des Objektivs zusammenfallen.

Vorzugsweise kann das zweite Beleuchtungsmittel an dem zweiten Reflektor angeordnet sein. Insbesondere kann das zweite Beleuchtungsmittel an einer in Richtung der Abstrahlrichtung weisende Stirnseite des zweiten Reflektors angeordnet sein. In einer bevorzugten Ausführungsform kann die Leiterplatte des zweiten Beleuchtungsmittels an der in Abstrahlrichtung weisenden Stirnseite des zweiten Reflektors angeordnet sein.

Vorzugsweise kann der zweite Reflektor an einem in Abstrahlrichtung liegenden Ende eine kegelstumpfförmige Ausnehmung aufweisen, wobei eine durch die kegelstumpfförmige Ausnehmung gebildete Innenseite des zweiten Reflektors, die zur Mantelfläche der kegelstumpfförmigen Ausnehmung korrespondiert, als reflektierende Fläche ausgebildet ist, um von dem zweiten Beleuchtungsmittel einfallendes Licht in Richtung des ersten Reflektors zu reflektieren. Mit anderen Worten, der zweite Reflektor weist an der in Abstrahlrichtung weisenden Stirnseite einen am Außenumfang umlaufenden Vorsprung auf, welcher sich in Richtung der Abstrahlrichtung erstreckt, wobei sich der durch den Vorsprung gebildete Innendurchmesser zumindest Abschnittsweise in Richtung der Abstrahlrichtung vergrößert. Ferner ist der durch den Vorsprung gebildete Innendurchmesser größer als der Außendurchmesser des zweiten Beleuchtungsmittels. Des Weiteren ist der Vorsprung rotationssymmetrisch in Bezug auf die Zylinderachse des zweiten Reflektors bzw. der optischen Achse ausgebildet.

Vorzugsweise können der Mittelpunkt der ringförmigen Leiterplatten des ersten Beleuchtungsmittels und des zweiten Beleuchtungsmittels auf der optischen Achse liegen und die Leiterplatten des ersten Beleuchtungsmittels und des zweiten Beleuchtungsmittels parallel zueinander ausgerichtet sein.

Vorzugsweise können das Gehäuse, der erste Reflektor und/oder der zweite Reflektor aus Metall, beispielsweise Aluminium oder Edelstall gefertigt sein, und somit gegenüber Umwelteinflüssen besonders widerstandsfähig sein.

Vorzugsweise können die reflektierende Fläche des ersten Beleuchtungsmittels und die reflektierende Fläche des zweiten Beleuchtungsmittels einen hohen Reflexionsgrad aufweisen. Zum Erzielen des hohen Reflexionsgrads können die reflektierenden Flächen poliert sein, mit einer reflektierenden Folie beschichtet sein oder Reflektoren aufweisen.

Bevorzugt kann das Kamerasystem an einem Fahrwagen und/oder Schiebstab anordenbar sein. Insbesondere kann das Gehäuse ein Verbindungsmittel aufweisen, mittels dessen das Kamerasystem mit einem Fahrwagen und/oder Schiebestab verbindbar ist.

Ein weiterer Aspekt betrifft ein Kanal- bzw. Rohrinspektionssystem, aufweisend:
einen Fahrwagen oder Schiebstab, und
ein an dem Fahrwagen oder Schiebstab angeordnetes Kamerasystem nach einem der vorangegangenen Ansprüche.

Des Weiteren kann das Kamerasystem Merkmale entsprechend den obigen Ausführungen aufweisen.

Nachfolgend ist ein Ausführungsbeispiel des erfindungsgemäßen Kamerasystems anhand von Zeichnungen näher erläutert. Es versteht sich, dass die vorliegende Erfindung nicht auf das nachstehend beschriebene Ausführungsbeispiel beschränkt ist, und dass einzelne Merkmale davon zu weiteren Ausführungsbeispielen kombiniert werden können.

Es zeigen:
- Fig. 1: eine Explosionszeichnung eines Kamerasystems gemäß dem Ausführungsbeispiel der Erfindung, und
- Fig. 2: eine beispielhafte Querschnittsansicht entlang der optischen Achse des Kamerasystems gemäß dem Ausführungsbeispiel der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

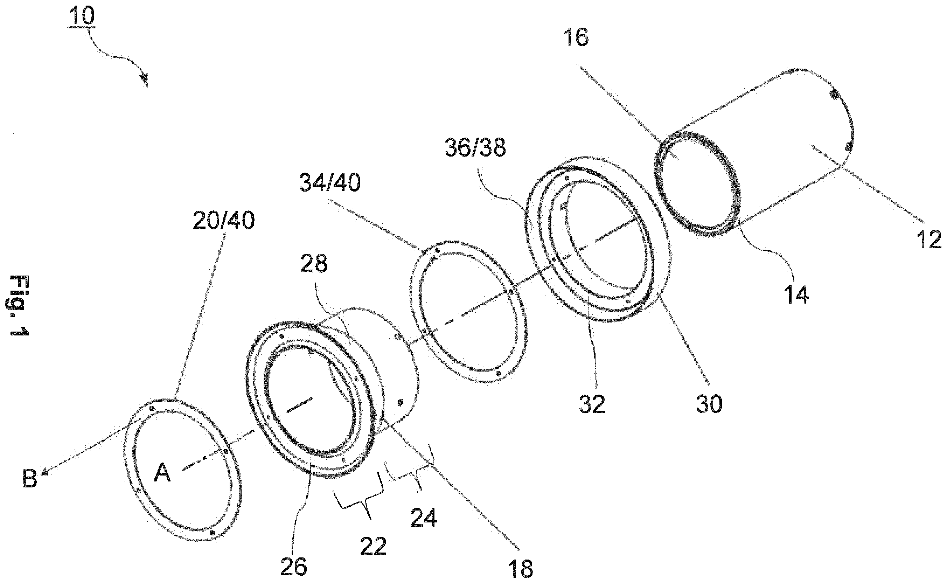

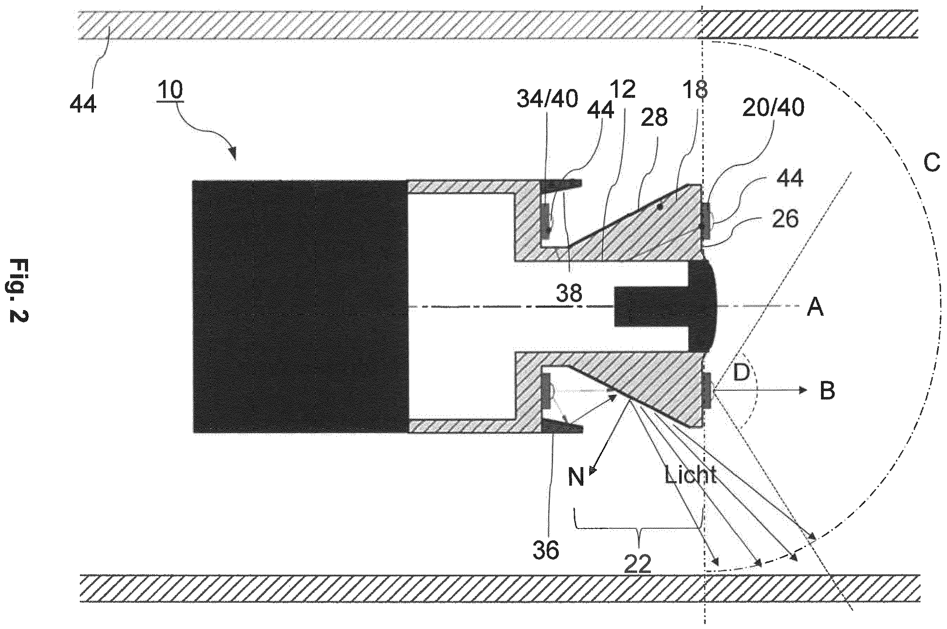

**Fig. 1** zeigt die Explosionszeichnung eines Kamerasystems 10 zur Rohr- und/oder Kanalinspektion gemäß einem Ausführungsbeispiel der Erfindung. Das Kamerasystem 10 weist ein Gehäuse 12 aus, welches im wesentlichen hohlzylindrisch ausgebildet ist. An einem offenen Ende 14 des hohlzylindrisch ausgebildeten Gehäuses 12 ist ein Objektiv 16 angeordnet. Das Objektiv 16 ist insbesondere fluiddicht mit dem Gehäuse 12 verbunden. Ferner ist das Objektiv 16 derart an dem Gehäuse 12 angeordnet, dass die optische Achse A des Objektivs 16 und die Zylinderachse des Gehäuses 12 zusammenfallen. Das Objektiv 16 ist dazu ausgebildet, ein in Blickrichtung des Objektivs befindliches Objekt auf eine im Gehäuse 12 angeordnete Bilderfassungseinheit (nicht gezeigt) abzubilden. Das Objektiv 16 kann insbesondere als Fischaugenobjektiv ausgebildet sein welches einen Bildwinkel bzw. Bildwinkelbereich C (siehe **Fig. 2**) von im Wesentlichen 180° aufweist.

Des Weiteren weist das Kamerasystem 10 einen ersten Reflektor 18 auf, der auf das Gehäuse 12 aufschiebbar ist und an dem Gehäuse 12 angeordnet ist. Der erste Reflektor 18 umgibt zumindest abschnittsweise entlang der Zylinderachse des Gehäuses 12 das Gehäuse 12. Ferner ist an dem ersten Reflektor 18 ein erstes Beleuchtungsmittel 20 vorgesehen, welches dazu ausgelegt ist, Licht in Richtung einer Abstrahlrichtung B (siehe Fig. 2) auszustrahlen, um das Objekt, beispielsweise das Innere eines Rohrs bzw. Kanals zu beleuchten. Das erste Beleuchtungsmittel 20 ist insbesondere radial um die optische Achse A des Objektivs 16 angeordnet. Die Abstrahlrichtung B ist vorzugsweise im Wesentlichen parallel zur optischen Achse des Objektivs 16.

Ferner erstreckt sich der erste Reflektor 18 von dem Ende 14 des Gehäuses 12 entgegen der Abstrahlrichtung B, wodurch das erste Beleuchtungsmittel 20 ungefähr an dem das Objektiv 156 aufweisende Ende 14 des Gehäuses 12 angeordnet ist. Des Weiteren weist der erste Reflektor 18 einen kegelstumpfförmigen Abschnitt 22 und einen sich an den kegelstumpfförmigen Abschnitt 22 anschließenden hohlzylindrisch Abschnitt 24 auf, der sich ausgehend von dem kegelstumpfförmigen Abschnitt 22 entgegen der Abstrahlrichtung B erstreckt. Die zylindrische Ausnehmung des hohlzylindrischen Abschnitts 24 erstreckt sich dabei vollständig durch den kegelstumpfförmigen Abschnitt 22, sodass der erste Reflektor 18 einen gleichbleibenden Innendurchmesser aufweist. Ferner entspricht der Innendurchmesser des ersten Reflektors 18 im Wesentlichen dem Außendurchmesser des Gehäuses 12, so dass der erste Reflektor 18 auf das Gehäuse 12 aufschiebbar ist. Mit anderen Worten, der Innendurchmesser des ersten Reflektors 18 ist unwesentlich größer als der Außendurchmesser des Gehäuses 12 (im Bereich, an dem der erste Reflektor 18 an dem Gehäuse 12 angeordnet ist).

Des Weiteren weist die Grundfläche 26 des kegelstumpfförmigen Abschnitts 22 in Richtung der Abstrahlrichtung B. Ferner kann vorgesehen sein, dass das erste Beleuchtungsmittel 20 an der Grundfläche 26 des kegelstumpfförmigen Abschnitts 22 angeordnet ist. Ferner verringert sich der Außendurchmesser des kegelstumpfförmigen Abschnitts 22 ausgehend von der Grundfläche 26 entgegen der Abstrahlrichtung B bis auf den Außendurchmesser des hohlzylindrischen Abschnitts 24. Die außenliegende Fläche 28, welche die Grundfläche 26 und den hohlzylindrisch Abschnitt 24 verbindet entspricht im Wesentlichen der Mantelfläche des kegelstumpfförmigen Abschnitts 22 und dient als reflektierende Fläche 28, deren Funktion weiter untenstehend erläutert wird.

Des Weiteren weist das Kamerasystem 10 einen zweiten Reflektor 30 auf, welcher im Wesentlichen hohlzylindrisch ausgebildet ist. Der Innendurchmesser des zweiten Reflektors 30 entspricht im Wesentlichen dem Außendurchmesser des hohlzylindrisch Abschnitts 24 des ersten Reflektors 18. Mit anderen Worten, der Innendurchmesser des zweiten Reflektors 30 ist unwesentlich größer als der Außendurchmesser des hohlzylindrisch Abschnitts 24 des ersten Reflektors 18. Der zweite Reflektor 30 ist insbesondere auf den hohlzylindrisch Abschnitt 24 des ersten Reflektors 18 aufschiebbar. Mit anderen Worten, der zweite Reflektor 30 umgibt zumindest abschnittsweise entlang der Zylinderachse des ersten Reflektors 18 den hohlzylindrisch Abschnitt 24 des ersten Reflektors 18. Ferner fällt die Zylinderachse des zweiten Reflektors 30 mit der optischen Achse A des Objektivs 16 zusammen.

Des Weiteren weist der zweite Reflektor 30 eine Stirnseite bzw. Stirnfläche 32 auf, welche in Richtung der Abstrahlrichtung A weist. Ferner ist an dem zweiten Reflektor 30 ein zweites Beleuchtungsmittel 34 vorgesehen, welches radial um die optische Achse A herum angeordnet ist. Insbesondere kann das zweite Beleuchtungsmittel 34 an einer in Richtung der Abstrahlrichtung B weisenden Seite des zweiten Reflektors 30 angeordnet sein. Beispielsweise kann das zweite Beleuchtungsmittel 34 an der Stirnfläche 32 des zweiten Reflektors 30 angeordnet sein. Folglich ist die reflektierende Fläche 28 des ersten Reflektors 18 zwischen dem ersten Beleuchtungsmittel 20 und dem zweiten Beleuchtungsmittel 34 angeordnet.

Das zweite Beleuchtungsmittel 34 kann insbesondere dazu ausgebildet sein, Licht in Richtung der Abstrahlrichtung B abzustrahlen, welches im weiteren Verlauf durch den ersten Reflektor 18 in den Bildwinkelbereich C (siehe Fig. 2) des Objektivs 16 reflektiert wird.

Des Weiteren weist der zweite Reflektor 30 an einem in Abstrahlrichtung B liegenden Ende eine kegelstumpfförmige Ausnehmung auf, wobei eine durch die kegelstumpfförmige Ausnehmung gebildete Innenseite des zweiten Reflektors 30, die zur Mantelfläche der kegelstumpfförmigen Ausnehmung korrespondiert, als reflektierende Fläche 38 ausgebildet ist, um von dem zweiten Beleuchtungsmittel 34 einfallendes Licht auf die reflektierende Fläche 28 des ersten Reflektors 18 zu reflektieren. Mit anderen Worten, der zweite Reflektor 30 weist an der in Abstrahlrichtung weisenden Stirnseite 32 einen am Außenumfang umlaufenden Vorsprung 36 auf, welcher sich in Abstrahlrichtung B erstreckt, wobei sich der durch den Vorsprung 36 gebildete Innendurchmesser zumindest Abschnittsweise in Richtung der Abstrahlrichtung B vergrößert. Ferner ist der durch den Vorsprung 36 gebildete Innendurchmesser größer als der Außendurchmesser des zweiten Beleuchtungsmittels 34. Des Weiteren ist der Vorsprung 36 rotationssymmetrisch in Bezug auf die Zylinderachse des zweiten Reflektors 30 bzw. der optischen Achse A ausgebildet. Ferner entspricht die Innenseite des Vorsprungs 36 der reflektierenden Fläche 38 des zweiten Reflektors 30.

Das erste Beleuchtungsmittel 20 und das zweite Beleuchtungsmittel 34 sind bevorzugt identisch ausgebildet und weisen jeweils eine ringförmige bzw. unterlegscheibenförmige Leiterplatte 40 auf, deren Mittelpunkte jeweils auf der optischen Achse A liegen. Ferner sind an jeder der Leiterplatten 40 eine Vielzahl von LEDs 42 (siehe **Fig. 2**) im Kreis herum angeordnet, wobei die LEDs 42 Licht in Richtung der Abstrahlrichtung B abstrahlen.

Die Leiterplatten 40 können jeweils an ihrem zugeordneten Reflektor 18/30 verschraubt sein.

Unter Bezugnahme auf **Fig. 2** wird nun die Funktion des Kamerasystems 10 erläutert. Fig. 2 zeigt eine schematische Querschnittsansicht des Kamerasystems 10 entlang der optischen Achse A. Ferner stellt Fig. 2 dar, wie das Kamerasystem 10 im Inneren eines Rohrs bzw. eines Kanals 44 angeordnet ist. Wie in Fig. 2 ersichtlich, weist das vorzugsweise als Fischaugenobjektiv ausgebildete Objektiv 16 einen Bildwinkelbereich C von ca. 180° auf.

Ferner weisen das erste Beleuchtungsmittel 20 und das zweite Beleuchtungsmittel 34 einen Abstrahlwinkel D auf, in dem Licht in Richtung der Abstrahlrichtung A abgestrahlt wird. In Fig. 2 ist dabei der Abstrahlwinkel D lediglich für das erste Beleuchtungsmittel 20 gezeigt, um die Darstellung übersichtlich zu halten. Mit dem Begriff Abstrahlwinkel D wird ein Aspekt der Richtcharakteristik des Beleuchtungsmittels beschrieben. Unter der Richtcharakteristik ist insbesondere die winkelabhängige Lichtstärke (Candela) des Beleuchtungsmittels zu verstehen. Vorliegend wird unter dem Begriff "Abstrahlwinkel" jener Winkel verstanden, der von den seitlichen Punkten, mit der das Licht vom dem ersten und zweiten Beleuchtungsmittel 20/34 abstrahlt, noch mit halber Maximal-Lichtstärke eingeschlossen wird. Mit anderen Worten, der Abstrahlwinkel gibt Auskunft darüber, in welchem Winkel das Licht von dem ersten Beleuchtungsmittel 20 und dem zweiten Beleuchtungsmittel 34 in Richtung eines Objekts abgestrahlt wird. Ferner wird im Rahmen der vorliegenden Offenbarung unter dem Begriff "Abstrahlrichtung" die Winkelhalbierende des Abstrahlwinkels D verstanden, wobei die Abstrahlrichtung B von dem Kamerasystem 10 weg weist und parallel zur optischen Achse A verläuft.

Wie aus Fig. 2 ersichtlich sind das erste Beleuchtungsmittel 20, das zweite Beleuchtungsmittel 34 und der erste Reflektor 18 bzw. die reflektierende Fläche 28 derart angeordnet, dass der Bildwinkelbereich des Objektivs 16 im Wesentlichen homogen ausgeleuchtet wird. Das erste Beleuchtungsmittel 20 beleuchtet mit dem zugehörigen Abstrahlwinkel D den Innenbereich des Bildwinkelbereichs C. Das zweite Beleuchtungsmittel 34 und der erste Reflektor 18 bzw. die reflektierende Fläche 28 des ersten Reflektors 18 sind derart zueinander angeordnet sein, dass das von dem zweiten Beleuchtungsmittel 14 ausgestrahlte Licht, welches von dem ersten Reflektor 18 in den Bildwinkelbereich C reflektiert wird, im Wesentlichen den an den Innenbereich (unmittelbar) anschließenden Außenbereich des Bildwinkelbereichs C beleuchtet bzw. in diesen einstrahlt. Mit anderen Worten, das zweite Beleuchtungsmittel 34 und der erste Reflektor 18 sind insbesondere dazu ausgebildet, zumindest den Abschnitt des Bildwinkelbereichs C auszuleuchten, welcher durch den Abstrahlwinkel D des ersten Beleuchtungsmittels 20 nicht erfasst wird. Dies betrifft insbesondere die Innenseite des Rohrs bzw. des Kanals 44. Ferner kann das erste Beleuchtungsmittel 20 dazu ausgebildet sein, ins Rohr- bzw. Kanalinnere zu leuchten. Entsprechend ermöglicht die vorgeschlagene Anordnung eine gleichmäßige, halbkugelförmige Ausleuchtung des Rohrs bzw. des Kanals 44 die im Wesentlichem dem Bildwinkelbereich des Objektivs 16 entspricht.

Des Weiteren kann die reflektierende Fläche 28 des ersten Reflektors 18 derart gegenüber der optischen Achse A angestellt sein, dass ein Normalenvektor N der reflektierenden Fläche 28 des ersten Reflektors 18 und die optische Achse A einen Winkel zwischen 40° und 85° einschließen, und bevorzugt einen Winkel zwischen 35° und 80° einschließen. Bevorzugt weist der Normalenvektor N ausgehend von dem ersten Reflektor 18, insbesondere ausgehend von der reflektierenden Fläche 28, von der optischen Achse A weg.

### Bezugszeichenliste

- 10: Kamerasystem
- 12: Gehäuse
- 14: Ende Gehäuse
- 16: Objektiv
- 18: erster Reflektor
- 20: erstes Beleuchtungsmittel
- 22: kegelstumpfförmiger Abschnitt
- 24: hohlzylindrischer Abschnitt
- 26: Grundfläche
- 28: reflektierende Fläche erster Reflektor
- 30: zweiter Reflektor
- 32: Stirnfläche
- 34: zweites Beleuchtungsmittel
- 36: Vorsprung
- 38: reflektierende Fläche zweiter Reflektor
- 40: Leiterplatte
- 42: LEDs
- 44: Rohr bzw. Kanal
- A: optische Achse
- B: Abstrahlrichtung
- C: Bildwinkelbereich
- D: Abstrahlwinkel
- N: Normalenvektor

## Patentansprüche

1. Kamerasystem (10) zur Rohr- und/oder Kanalinspektion, aufweisend:
ein Objektiv (16) zum Abbilden eines Objekts auf eine Bilderfassungseinheit,
ein erstes (20) und ein zweites Beleuchtungsmittel (34), die jeweils radial um die optische Achse (A) des Objektivs (16) angeordnet sind und dazu ausgebildet sind, Licht in Richtung einer Abstrahlrichtung (B), welche im Wesentlichen parallel zur optischen Achse (A) des Objektivs (16) verläuft, zum Beleuchten des Objekts auszustrahlen,
dadurch charakterisiert, dass
das erste Beleuchtungsmittel (20) in Abstrahlrichtung (A) liegend vor dem zweiten Beleuchtungsmittel (34) angeordnet ist und zwischen dem ersten Beleuchtungsmittel (20) und dem zweiten Beleuchtungsmittel (34) ein erster Reflektor (18, 28) angeordnet ist, der dazu ausgebildet ist, von dem zweiten Beleuchtungsmittel (34) einfallendes Licht in den Bildwinkelbereich (C) des Objektivs (16) zu reflektieren.

2. Kamerasystem (10) nach Anspruch 1, wobei das Objektiv (16) als Fischaugenobjektiv ausgebildet ist und bevorzugt einen Bildwinkelbereich (C) von bis zu 180° aufweist.

3. Kamerasystem (10) nach Anspruch 1 oder 2, ferner aufweisend einen zweiten Reflektor (30, 38), der dazu ausgebildet ist, von dem zweiten Beleuchtungsmittel (34) einfallendes Licht in Richtung des ersten Reflektors (18, 28) zu reflektieren.

4. Kamerasystem (10) nach einem der vorangegangenen Ansprüche, wobei das erste Beleuchtungsmittel (20) und das zweite Beleuchtungsmittel (34) identisch ausgebildet sind.

5. Kamerasystem (10) nach einem der vorangegangenen Ansprüche, wobei das erste Beleuchtungsmittel (20) und/oder das zweite Beleuchtungsmittel (34) eine Vielzahl von LEDs (42) aufweisen, die bevorzugt auf einer ringförmigen Leiterplatte (40) des jeweiligen Beleuchtungsmittels angeordnet sind.

6. Kamerasystem (10) nach einem der vorangegangenen Ansprüche, wobei der erste Reflektor (18) eine reflektierende Fläche (28) aufweist, die derart gegenüber der optischen Achse (A) angestellt ist, dass ein Normalenvektor (N) der reflektierenden Fläche (28) und die optische Achse (A) einen Winkel zwischen 40° und 85° einschließen, und bevorzugt einen Winkel zwischen 35° und 80° einschließen.

7. Kamerasystem (10) nach einem der vorangegangenen Ansprüche, weiter aufweisend ein im Wesentlichen hohlzylindrisches Gehäuse (12), wobei das Objektiv (16) an einem in Abstrahlrichtung (A) liegenden Ende des Gehäuses (12) angeordnet ist.

8. Kamerasystem (10) nach Anspruch 7, wobei der erste Reflektor (18) als hohlzylindrischer Kegelstumpf (22) ausgebildet ist, der um das Gehäuse (12) herum angeordnet ist, wobei die Mantelfläche des ersten Reflektors (18) als reflektierende Fläche (28) ausgebildet ist, um von dem zweiten Beleuchtungsmittel (34) einfallendes Licht in den Bildwinkelbereich (C) des Objektivs (16) zu reflektieren.

9. Kamerasystem (10) nach einem der vorangegangenen Ansprüche, wobei das erste Beleuchtungsmittel (20) an einer in Abstrahlrichtung liegenden Seite (26) des ersten Reflektors (18) angeordnet ist.

10. Kamerasystem (10) nach einem der vorangegangenen Ansprüche 7-9, wobei der zweite Reflektor (30) im Wesentlichen hohlzylindrisch ausgebildet ist und um das Gehäuse (12) herum angeordnet ist,
wobei der zweite Reflektor (30) an einem in Abstrahlrichtung (A) liegenden Ende eine kegelstumpfförmige Ausnehmung aufweist und eine durch die kegelstumpfförmige Ausnehmung gebildete Innenseite des zweiten Reflektors (30), die zur Mantelfläche der kegelstumpfförmigen Ausnehmung korrespondiert, als reflektierende Fläche (38) ausgebildet ist, um von dem zweiten Beleuchtungsmittel (34) einfallendes Licht in Richtung des ersten Reflektors (18, 28) zu reflektieren.

11. Kamerasystem (10) nach Anspruch 10, wobei das zweite Beleuchtungsmittel (34) an dem zweiten Reflektor (30) angeordnet ist.

12. Kamerasystem (10) nach einem er vorangegangenen Ansprüche, wobei das Kamerasystem (10) an einem Fahrwagen anordenbar ist.

13. Kanal- bzw. Rohrinspektionssystem, aufweisend:
einen Fahrwagen, und
ein an dem Fahrwagen angeordnetes Kamerasystem (10) nach einem der vorangegangenen Ansprüche.

## Claims

1. Camera system (10) for inspecting pipes and/or ducts, having:
a lens (16) for imaging an object onto an image-capturing unit,
a first illuminating means (20) and a second illuminating means (34), which are each arranged radially around the optical axis (A) of the lens (16) and are designed to emit light in an emission direction (B), which runs substantially parallel to the optical axis (A) of the lens (16), in order to illuminate the object,
**characterised in that**
the first illuminating means (20) is arranged in front of the second illuminating means (34) in the emission direction (B), and a first reflector (18, 28) is arranged between the first illuminating means (20) and the second illuminating means (34), which first reflector is designed to reflect light incident from the second illuminating means (34) into the image angle range (C) of the lens (16).

2. Camera system (10) according to claim 1, wherein the lens (16) is designed as a fish-eye lens and preferably has an image angle range (C) of up to 1.

3. Camera system (10) according to claim 1 or 2, further having a second reflector (30, 38), which is designed to reflect light incident from the second illuminating means (34) in the direction of the first reflector (18, 28).

4. Camera system (10) according to any one of the preceding claims, wherein the first illuminating means (20) and the second illuminating means (34) are designed identically.

5. Camera system (10) according to any one of the preceding claims, wherein the first illuminating means (20) and/or the second illuminating means (34) have a plurality of LEDs, which are preferably arranged on an annular circuit board (40) of the respective illuminating means.

6. Camera system (10) according to any one of the preceding claims, wherein the first reflector (18) has a reflective surface (28), which is positioned with respect to the optical axis (A) such that a normal vector (N) of the reflecting surface (28) and the optical axis (A) enclose an angle between 40°and 85°, and preferably enclose an angle between 35° and 80°.

7. Camera system (10) according to any one of the preceding claims, further having a substantially hollow cylindrical housing (12), wherein the lens (16) is arranged at an end of the housing (12) lying in the radiation direction (A).

8. Camera system (10) according to claim 7, wherein the first reflector (18) is designed as a hollow cylindrical truncated cone (22), which is arranged around the housing (12), wherein the lateral surface of the first reflector (18) is designed as a reflective surface (28) in order to reflect light incident from the second illuminating means (34) into the image angle range (C) of the lens (16).

9. Camera system (10) according to any one of the preceding claims, wherein the first illuminating means (20) is arranged on a side (26) of the first reflector (18) lying in the radiation direction.

10. Camera system (10) according to any one of the preceding claims 7-9, wherein the second reflector (30) is designed to be substantially hollow cylindrical and is arranged around the housing (12),
wherein the second reflector (30) has a truncated cone-shaped recess at an end lying in the radiation direction (A) and an inner side of the second reflector (30) formed by the truncated cone-shaped recess and corresponding to the lateral surface of the truncated cone-shaped recess is formed as a reflecting surface (38) in order to reflect light incident from the second illuminating means (34) in the direction of the first reflector (18, 28).

11. Camera system (10) according to claim 10, wherein the second illuminating means (34) is arranged on the second reflector (30).

12. Camera system (10) according to any one of the preceding claims, wherein the camera system (10) can be arranged on a trolley.

13. Duct and/or pipe inspection system, having:
a trolley, and
a camera system (10) according to any one of the preceding claims arranged on the trolley.

## Revendications

1. Système de caméra (10) destiné à inspecter des tuyaux et/ou des conduits, présentant :
un objectif (16) destiné à reproduire un objet sur une unité de détection d'image,+
un premier (20) et un deuxième moyen d'éclairage (34), qui sont disposés respectivement radialement autour de l'axe optique (A) de l'objectif (16) et qui sont réalisés pour émettre de la lumière en direction d'une direction de rayonnement (B), laquelle s'étend de manière sensiblement parallèle à l'axe optique (A) de l'objectif (16), pour éclairer l'objet,
**caractérisé en ce que**
le premier moyen d'éclairage (20) est disposé devant le deuxième moyen d'éclairage (34) tout en étant situé dans la direction de rayonnement (A) et un premier réflecteur (18, 28), qui est réalisé pour réfléchir de la lumière incidente provenant du deuxième moyen d'éclairage (34) dans la plage d'angle d'image (C) de l'objectif (16), est disposé entre le premier moyen d'éclairage (20) et le deuxième moyen d'éclairage (34).

2. Système de caméra (10) selon la revendication 1, dans lequel l'objectif (16) est réalisé en tant qu'objectif fisheye et présente de manière préférée une plage d'angle d'image (C) allant jusqu'à 180°.

3. Système de caméra (10) selon la revendication 1 ou 2, présentant en outre un deuxième réflecteur (30, 38), qui est réalisé pour réfléchir de la lumière incidente provenant du deuxième moyen d'éclairage (34) en direction du premier réflecteur (18, 28).

4. Système de caméra (10) selon l'une quelconque des revendications précédentes, dans lequel le premier moyen d'éclairage (20) et le deuxième moyen d'éclairage (34) sont réalisés de manière identique.

5. Système de caméra (10) selon l'une quelconque des revendications précédentes, dans lequel le premier moyen d'éclairage (20) et/ou le deuxième moyen d'éclairage (34) présentent une pluralité de DEL (42), qui sont disposées de manière préférée sur une carte de circuits imprimés (40) de forme annulaire du moyen d'éclairage respectif.

6. Système de caméra (10) selon l'une quelconque des revendications précédentes, dans lequel le premier réflecteur (18) présente une surface réfléchissante (28), qui est placée de telle manière par rapport à l'axe optique (A) qu'un vecteur normal (N) de la surface réfléchissante (28) et l'axe optique (A) forment un angle entre 40° et 85°, et forment de manière préférée un angle entre 35° et 80°.

7. Système de caméra (10) selon l'une quelconque des revendications précédentes, présentant par ailleurs un boîtier (12) sensiblement cylindrique creux, dans lequel l'objectif (16) est disposé sur une extrémité du boîtier (12) située dans la direction de rayonnement (A).

8. Système de caméra (10) selon la revendication 7, dans lequel le premier réflecteur (18) est réalisé en tant que cône tronqué (22) cylindrique creux, qui est disposé tout autour du boîtier (12), dans lequel la surface enveloppante du premier réflecteur (18) est réalisée en tant que surface réfléchissante (28) pour réfléchir de la lumière incidente provenant du deuxième moyen d'éclairage (34) dans la plage d'angle d'image (C) de l'objectif (16).

9. Système de caméra (10) selon l'une quelconque des revendications précédentes, dans lequel le premier moyen d'éclairage (20) est disposé sur un côté (26) du premier réflecteur (18) situé dans la direction de rayonnement.

10. Système de caméra (10) selon l'une quelconque des revendications précédentes 7 - 9, dans lequel le deuxième réflecteur (30) est réalisé de manière sensiblement cylindrique creuse et est disposé tout autour du boîtier (12),
dans lequel le deuxième réflecteur (30) présente un évidement en forme de cône tronqué sur une extrémité située dans la direction de rayonnement (A) et un côté intérieur, formé par l'évidement en forme de cône tronqué, du deuxième réflecteur (30), qui correspond à la surface enveloppante de l'évidement en forme de cône tronqué, est réalisé en tant que surface réfléchissante (38) pour réfléchir de la lumière incidente provenant du deuxième moyen d'éclairage (34) en direction du premier réflecteur (18, 28).

11. Système de caméra (10) selon la revendication 10, dans lequel le deuxième moyen d'éclairage (34) est disposé sur le deuxième réflecteur (30).

12. Système de caméra (10) selon l'une quelconque des revendications précédentes, dans lequel le système de caméra (10) peut être disposé sur un chariot.

13. Système d'inspection de conduits et/ou de tuyaux, présentant :
un chariot, et
un système de caméra (10) disposé sur le chariot selon l'une quelconque des revendications précédentes.
